# EUROPÄISCHE PATENTSCHRIFT

(11) **EP 0 945 705 B1**
(45) Veröffentlichungstag und Bekanntmachung des Hinweises auf die Patenterteilung: **23.11.2005**
(21) Anmeldenummer: 99105430.5
(22) Anmeldetag: 17.03.1999
(51) Int. Cl.: G01C 21/20, G10L 15/00

(54) **Erkennungssystem**
Recognition system
Système de reconnaissance

(30) Priorität: 27.03.1998 DE 19813605
(43) Veröffentlichungstag der Anmeldung: 29.09.1999
(73) Patentinhaber: Harman Becker Automotive Systems GmbH, 76307 Karlsbad (DE)
(72) Erfinder: Klemm, Heinz, 89134 Blaustein (DE); Küstner, Michael, 89075 Ulm (DE); Nüssle, Gerhard, 89134 Blaustein (DE)
(74) Vertreter: Grünecker, Kinkeldey, Stockmair & Schwanhäusser Anwaltssozietät

(56) Entgegenhaltungen:
- EP-A- 0 768 638
- DE-C- 19 709 518

## Beschreibung

Die Erfindung betrifft ein Erkennungssystem und ein Verfahren nach den Oberbegriffen der Patentansprüche 1 und 10.

Eine bevorzugte Anwendung für ein solches Erkennungssystem und Verfahren ist beispielsweise die Spracheingabe von Ortsnamen in ein sprachgesteuertes Navigationssystem in einem Fahrzeug. Dem Navigationssystem liegt eine geschlossene Ortsnamenliste zugrunde, die beispielsweise auf einem austauschbaren Datenträger vorliegt und über eine Leseeinrichtung in einen Arbeitsspeicher des Erkennungssystems übertragen wird.

Für ein solches System kann sich eine Verarbeitungstotzeit dadurch ergeben, daß nach einem Wechsel des Datenträgers, nach einem Abschalten eines flüchtigen Speichers als Arbeitsspeicher etc. erst der Datensatz in den Arbeitsspeicher übertragen werden muß. Aus Aufwands- und Kostengründen erfolgt die Übertragung vorzugsweise nicht interaktiv mit selektivem Zugriff auf ausgewählte Bereiche des Datenträgers, sondern beispielsweise als gesamter Datensatz ohne inhaltliche Interpretation bei der Übertragung. Bei niedrigen Übertragungsraten, wie sie bei Datenbussystemen in Fahrzeugen auftreten, kann der Übertragungsvorgang einige Zeit in Anspruch nehmen, die vom Benutzer, der in dieser Zeit keine Reaktion des Erkennungssystems auf eine Spracheingabe erfährt, als nachteilig empfunden wird.

Aus der DE 19709518 C1 ist ein Verfahren und ein Erkennungssystem gemäß den Oberbegriffen der Ansprüche 1 und 10 bekannt.

Der vorliegenden Erfindung liegt daher die Aufgabe zugrunde, ein Verfahren und ein Erkennungssystem der genannten Art anzugeben, welches bei Übertragung eines Datensatzes vom Lesespeicher in den Arbeitsspeicher schneller auf eine Eingabe reagiert.

Die Erfindung ist in den Patentansprüchen beschrieben. Die abhängigen Ansprüche enthalten vorteilhafte Ausgestaltungen und Weiterbildungen der Erfindung.

Bei dem erfindungsgemäßen Erkennungssystem und Verfahren liegt bereits nach sehr kurzer Zeit in Form der Teildaten der ersten Strukturebenen ein Datenbestand vor, der zwar noch unvollständig ist und nur einen kleinen Bruchteil des Umfangs des gesamten Datensatzes ausmacht, der aber bereits eine teilweise Abarbeitung des Erkennungsvorgangs und damit auch eine Reaktion gegenüber dem Benutzer ermöglicht. Die Erfindung macht sich dabei zunutze, daß die Datenmengen der Teildaten zu den ersten Strukturebenen vergleichsweise gering ist.

In einigen Anwendungsfällen kann es von Vorteil sein, für die Zeichen innerhalb einer Strukturebene nicht nur einzelne Symbole eines Symbolvorrats, insbesondere eines alphanumerischen Symbolvorrats zuzulassen, sondern auch Symbolfolgen als Zeichen aufzunehmen, insbesondere solche Symbolfolgen, innerhalb derer die Zeichenfolgen des Datensatzes keine Verzweigung aufweisen. Beim Anwendungsfall der Ortsnamen aus einer Namensliste kann dadurch für viele, insbesondere längere Ortsnamen die Erkennungszeit deutlich verringert werden.

Eine wegen geringen Speicherbedarfs und damit geringer Übertragungszeit vorteilhafte Ausführungsform der Erfindung sieht vor, bei der Speicherung der Teildaten einer Strukturebene neben den Zeichen selbst nicht explizit deren zulässige Nachfolgerzeichen sondern nur die Anzahl der jeweils zulässigen Nachfolgerzeichen abzuspeichern. Zum Auffinden der Nachfolgerzeichen zu einem Zeichen wird durch Summenbildung über alle dazwischen liegenden Zeichen eine Distanz innerhalb des Datenstroms als relative Adresse bestimmt und die nach dieser Datenstromdistanz vorliegenden Zeichen werden für die weitere Verarbeitung der aktuellen Eingabe-Zeichenfolge ausgewertet. Wenn für die Zeichen nicht nur Einzelsymbole sondern auch Symbolfolgen stehen können, wird vorteilhafterweise noch die Anzahl der Symbole je Zeichen als Information gespeichert und die vorstehend angegebene relative Adressierung durch zusätzliche Berücksichtigung der Zeichenlänge angewandt.

Die vorstehend beschriebene Datenstrukturierung ist auch unabhängig von der vorliegenden Erfindung vorteilhaft für in einer Verzweigungsstruktur darstellbare Zeichenfolgen zur Übertragung und/oder Speicherung. Bekannte vorteilhafte Techniken der Datenspeicherung wie beispielsweise Verschachtelung, redundante Codierung mit Fehlerkorrektur etc. bleiben hiervon unberührt und sind im Regelfall zusätzlich einsetzbar.

Die Eingabeeinrichtung ist insbesondere zur Spracheingabe ausgebildet und weist hierzu beispielsweise ein Mikrophon und einen Spracherkenner auf. Spracherkenner sind in zahlreichen Formen aus dem Stand der Technik bekannt, wobei sowohl Worterkenner zur Eingabe zusammenhängender Sprache als auch bevorzugt Einzelsymbolerkenner für buchstabierende Spracheingabe in Frage kommen.

Die Erfindung ist nachfolgend anhand bevorzugter Ausführungsbeispiele noch eingehend erläutert. Dabei zeigt:
- Fig. 1: einen schematischen Aufbau eines Datensatzes
- Fig. 2: ein erstes Ausführungsbeispiel
- Fig. 3: ein zweites Ausführungsbeispiel

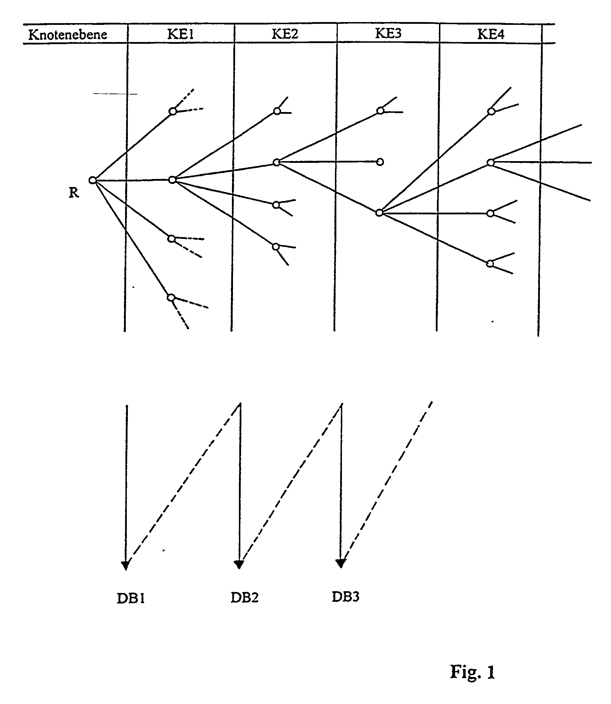

Bei dem in Fig. 1 skizzierten Aufbau eines Verzweigungnetzwerkes wird ausgegangen von einem Wurzelknoten R als neutralem Startknoten, von welchem zulässige Pfade zu einer Mehrzahl von Knoten einer ersten Verzweigungsebene E1 führen. Die Knoten der ersten Ebene E1 repräsentieren beispielsweise Anfangsbuchstaben von Namen. Typischerweise enthält der Datensatz zu den meisten oder allen der Knoten der ersten Ebene mehrere zulässige Nachfolgerzeichen, so daß von jedem Knoten der ersten Ebene mehrere Pfade sich verzweigend weiterführen zur zweiten Ebene. Auch in der zweiten Ebene E2 und in den folgenden Knotenebenen treten weitere Verzweigungen auf, so daß sich eine Verzweigungsstruktur ergibt, die wegen ihres Aussehens auch als Baumstruktur bezeichnet wird. Die Anordnung der den Datensatz bildenden Datenmenge in Form der Informationen zu den einzelnen Knoten der aufeinanderfolgenden Knotenebene erfolgt nun in der Weise, daß in einem ersten Datenblock B1 die Daten zu den Knoten der Knotenebene E1 zusammenhängend eingruppiert werden und auf diesen ersten Datenblock ein zweiter Datenblock B2 folgt, in welchem wiederum die Daten zu den Knoten der Knotenebene E2 zusammenhängend gruppiert sind. Diese Gruppierung in Datenblöcken und Aneinanderreihung der Datenblöcke wird bis zur letzten Knotenebene fortgesetzt. Bei einer Codierung von Ortsnamen steigt dabei typischerweise der Umfang der Datenblöcke von der ersten Knotenebene mit 29 verschiedenen Anfangsbuchstaben innerhalb der nächsten Ebene steil an um für einige Knotenebenen auf hohem Niveau zu verharren und danach wieder deutlich abzufallen.

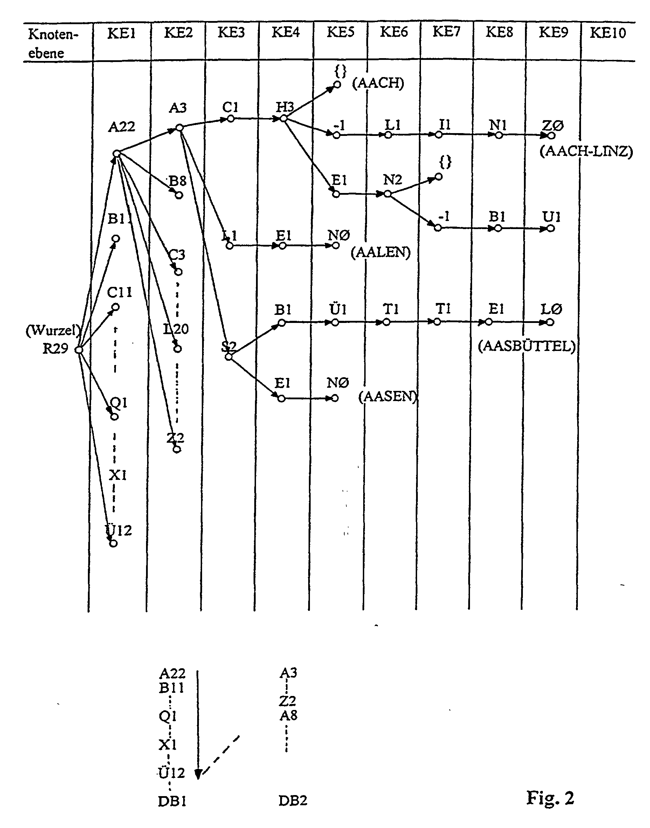

Bei dem in Fig. 2 skizzierten Ausführungsbeispiel für die Darstellung einer Ortsnamenliste in einer baumartigen Verzweigungsstruktur seien für jedes Zeichen, d.h. für jeden Knoten der Knotenebenen ein Buchstabe aus dem vorgegebenen Symbolvorrat vorgesehen. Die Symbole sind dabei insbesondere die Buchstaben des Alphabets einschließlich der Umlaute. Der Symbolvorrat kann darüberhinaus noch Sonderzeichen wie -, /, oder Zahlen enthalten. Als zu einem Knoten gehörige Information ist jeweils das diesem Knoten zugehörige Zeichen abgelegt. Die hinter diesem Zeichen stehende Zahl informiert über die Anzahl der Verzweigungen, die von diesem Knoten abgehen und zu zulässigen Nachfolgezeichen als Knoten der nächsten Ebene KE2 führen. Der Eintrag im obersten Knoten der ersten Schicht KE1 bedeutet also, daß dieser Knoten den Anfangsbuchstaben A repräsentiert und zu diesem Anfangsbuchstaben 22 verschiedene Nachfolgerzeichen zulässig sind. Für die anderen Anfangsbuchstaben entsprechend den anderen Knoten sind im Regelfall andere Anzahlen von zulässigen Nachfolgern gegeben. Sonderfälle hierbei bilden der Buchstabe Q, welchem im deutschen Sprachgebrauch immer nur der Buchstabe u folgen kann und der Buchstabe X, zu welchem in einem angenommenen Beispielsfall einer Ortsnamenliste nur ein Ortsnamen enthalten ist. Beide Zeichen haben deshalb die Nachfolgeranzahl 1. Der Datenblock DB1 zur ersten Datenebene KE1 enthält dann zusammenhängend die Einträge A22, B11, ... bis Ü12 als Information über die Knoten dieser Datenebene.

Aus der Anzahl der Knoten in der ersten Knotenschicht, welche in der Information R29 des Wurzelknotens enthalten ist und der Position des aktuellen Zeichens A an erster Stelle dieser Knotenebene ergibt sich eine Distanz von 28 Einträgen (B11 bis Ü12) bis zum Beginn des nächsten Datenblocks zu der Knotenebene KE2. Aus dem Eintrag A22 zu dem aktuellen Knoten ergibt sich ferner, daß die ersten 22 Einträge nach dieser Distanz im Datenstrom die Information zu zulässigen Nachfolgerzeichen enthalten. Entscheidet der Spracherkenner bei einem zweiten eingegebenen Zeichen auf das Vorliegen des Buchstabens A, welcher in der Knotenebene E2 einen zulässigen Nachfolger für den Buchstaben A in der ersten Schicht darstellt, so wird der Pfad von diesem Knoten zum Buchstaben A in der zweiten Ebene weitergeführt. Bei diesem Knoten zum Buchstaben A in der zweiten Knotenebene KE2 steht als Zusatz die Zahl 3, wodurch ausgedrückt ist, daß zu diesem Knoten drei zulässige Nachfolgerzeichen existieren, die wiederum durch Knoten in der dritten Knotenebene repräsentiert sind. Die Verzweigungsstruktur weist daher vom Knoten A3 in der zweiten Knotenebene drei weiterführende Wege zu Knoten in der dritten Knotenebene KE3 auf.

Der Datenblock DB2 der zweiten Knotenebene KE2 enthält dann als Einträge die Knoteninformation der Nachfolgerknoten zu dem Knoten A22 der ersten Knotenebene, also beispielsweise A3, B8, ..., Z2, denen die Informationen zu 11 zulässigen Nachfolgerzeichen in der zweiten Knotenebene KE2 zu dem Knoten B11 der ersten Knotenebene KE1 folgen, also beispielsweise A8 bis U13. Danach folgen die Nachfolgerknoten der zweiten Knotenebene KE2 zum Knoten C11 der ersten Knotenebene KE1 usw. bis alle Knoten der Knotenebene KE2 den vollständigen Datenblock DB2 zu dieser Knotenebene bilden. Nach diesem Datenblock DB2 folgen die Informationen zu den Knoten der Knotenebene KE3. Die relative Distanz vom Knoten A3 der zweiten Knotenebene KE2 zu dessen zulässigen Nachfolgern im Datenblock DB3 ergibt sich aus der Summe der dazwischen liegenden Einträge, die aus der bis dahin vorliegenden Information bereits daraus ableitbar sind, daß der Knoten A3 der zweiten Knotenebene die erste Position innerhalb der zulässigen Nachfolger zum Knoten A22 der ersten Knotenebene bildet und damit noch 21 Nachfolgerknoten zu A22 zu überspringen sind. Zu den zu überspringenden und damit zu der Distanz zu den Nachfolgerknoten zu A3 beitragenden Einträgen zählen alle Nachfolgerknoten zu den nach A22 folgenden Knoten der ersten Knotenebene KE2, wobei sich deren Anzahl aus den den Buchstaben beigestellten Zahlen (B)11, (C)11, ..., (Ü)12 kumulativ ergibt. Die nach dieser Distanz im Datenstrom auftretenden drei Einträge werden als mögliche Nachfolger zu dem Knoten A3 der zweiten Ebene und damit insgesamt zu der Zeichenfolge AA weiterbehandelt. Innerhalb der zulässigen Nachfolger C, L und S entscheide der Spracherkenner auf das Vorliegen des Buchstabens S als drittem Zeichen der Eingabe-Zeichenfolge und der Pfad wird vom Nachfolgerknoten S, für welchen in dem gegebenen Beispielsfall 2 Nachfolgerzeichen zulässig sein sollen und der deshalb als Gesamteintrag S2 vorliegt, weitergeführt. Für die Distanz zu den zwei zulässigen Nachfolgerknoten in der Ebene KE4 zu diesem Knoten 2 in der Ebene KE3 sind neben den folgenden Einträgen der Knotenebene KE3 auch noch die in der Knotenebene KE4 darüberliegenden Einträge, im Beispielsfall H3 und E1 zu zählen.

Durch vom Spracherkenner geführtes Fortschreiten innerhalb der Verzweigungsstruktur wird in der neunten Knotenebene ein Knoten L erreicht, welcher als Ende eines Namens dadurch gekennzeichnet ist, daß die beigestellte Zahl der zulässigen Nachfolger gleich Null ist. Der eingegebene Ortsname ist damit vollständig aufgebaut. Hierzu mußten im Beispielsfall die Teildaten aus neuen Knotenebenen aus dem Lesespeicher in den Arbeitsspeicher übertragen werden, so daß der vollständige Namensaufbau erst ziemlich spät abgeschlossen ist. Durch den frühzeitigen Start des Erkenners und die schrittweise Verfolgung des Pfads durch das Verzweigungsnetzwerk kann aber bereits nach dem Laden weniger Ebenen, beispielsweise von vier Ebenen durch Aufbau einer Anzeige mit den ersten zugeordneten Zeichen der Eingabe-Zeichenfolge zu einer der gespeicherten Zeichenfolgen dem Benutzer signalisiert werden, daß seine Spracheingabe bearbeitet wird. Ferner kann der Benutzer bei Erkennen einer falschen Zuordnung eines eingegebenen Zeichens die weitere Verarbeitung abbrechen und eine neue Eingabe starten.

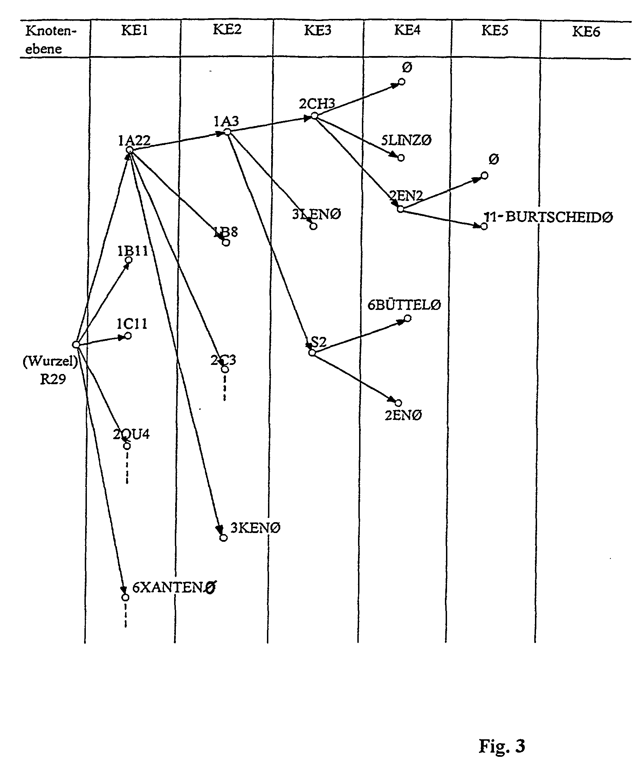

Die in Fig. 3 skizzierte Ausführungsform unterscheidet sich von der in Fig. 2 skizzierten Ausführungsform im wesentlichen dadurch, daß als Zeichen in einem Knoten einer Knotenebene nicht nur ein einzelnes Symbol aus dem Symbolvorrat sondern auch eine Symbolfolge enthalten sein kann. Diese Zusammenfassung von mehreren aufeinanderfolgenden Symbolen in einem einzigen Knoten ist insbesondere dann von Vorteil, wenn ein nach Fig. 2 detailliert aufgebautes Verzweigungsnetzwerk zwischen zwei oder mehreren in verschiedenen Ebenen aufeinanderfolgenden Knoten keine Verzweigung enthält. Dies gilt bei dem zu Fig. 2 im Detail beschriebenen Ortsnamen AASBÜTTEL für die Zeichenfolge BÜTTEL, deren Pfad mit Erreichen des Knotens B1 in der vierten Knotenebene der Fig. 2 bis zum Buchstaben L und in diesem Beispiel damit auch bis zum Wortende bereits feststeht. Da in diesem Beispiel der Fig. 2 die Knotenebenen 5 bis 9 keine Pfadentscheidung mehr bieten sind bei der Ausführungsform nach Fig. 3 alle Zeichen dieser Teilfolge Büttel bereits in einem Knoten der vierten Knotenebene KE4 zusammengefaßt. Mit Erreichen des Knotens Büttel der vierten Knotenebene kann damit bereits abschließend geprüft werden, ob die Gesamtzeichenfolge AASBÜTTEL für eine Zuordnung der Eingabe-Zeichenfolge aufgrund von kumulierten Wahrscheinlichkeiten des Spracherkenners oder vergleichbaren Kriterien angenommen werden kann. Eine ähnliche Situation ergibt sich für den Ortsnamen AALEN in dem skizzierten Verzweigungsnetzwerk, bei welchem die Symbolfolge LEN, welche in Fig. 2 auf drei Knotenebenen KE3 bis KE5 verteilt ist, nach Fig. 3 in einem Knoten LEN der Knotenebene KE3 zusammengefaßt werden kann. Die zusammenfaßbaren Symbolfolgen sind nicht notwendig am Ende der Ortsnamen sondern können auch Zwischenabschnitte in mittleren Bereichen von Namen oder am Anfang ausmachen. Typische Symbolfolgen, die sich häufig aufgrund eines eindeutigen detaillierten Pfads zusammenfassen lasen, sind CH oder CK, notwendigerweise zusammen tritt die Symbolfolge QU auf und für eine mit dem Buchstaben X beginnende Eingabe-Zeichenfolge bliebe beim Beispiel der deutschen Ortsnamen nur der Name XANTEN, der damit bereits in der ersten Knotenebene vollständig untergebracht und erkannt werden kann.

Zur effektiven Speicherung, Übertragung und Bearbeitung eines solchen modifizierten Verzweigungsnetzwerks mit der Zulässigkeit von Symbolfolgen in einem Netzwerkknoten können vorteilhafterweise die Einträge zu den einzelnen Knoten um eine weitere Zahl, welche die Anzahl der Symbole innerhalb dieses Knotens angibt, ergänzt werden. Diese Zahl sei dem zu Fig. 2 bereits im Detail erläuterten Eintrag zu einem Knoten vorangestellt. Der Eintrag 1A22 zu einem Knoten bedeutet dann, daß dieser Knoten ein Symbol enthält, daß dieses Symbol der Buchstabe A ist und daß zu diesem Knoten 22 zulässige Nachfolgerknoten in der hierarchisch nächsten Knotenebene vorhanden sind. Ein Knoteneintrag 2QU4 bedeutet in dieser Darstellung, daß der Knoten 2 Symbole enthält, daß diese Symbole nacheinander Q und U lauten und daß zu diesem Knoten in der nächsten Knotenebene 4 zulässige Nachfolgerknoten existieren. Der Eintrag 6XANTEN0 bedeutet dann, daß zu dem Knoten eine sechsstellige Symbolfolge XANTEN gehört und der Namen damit bereits vollständig ist und keinen zulässigen Nachfolger mehr hat.

Zur Bestimmung der relativen Position der Gruppe der Einträge der zulässigen Nachfolger ist dann in Abänderung gegenüber der Bestimmung nach dem Beispiel der Fig. 2 noch die Länge der Einträge zu den jeweils dazwischenliegenden Knoten zu berücksichtigen.

Soweit von dem Ortsnamen-Erkenner nicht ohnehin anhand der Angaben zu den einzelnen Knoten die Nummer der bereits übertragenen Datenblöcke bestimmbar ist, können diese Datenblocknummern zusätzlich mit angegeben werden. Mit Kenntnis der Anzahl der übertragenen Blöcke kann die Ortsnamen-Erkennung schritthaltend mit der Übertragung der Daten aus dem Lesespeicher fortgeführt werden. Es können beispielsweise die Teildaten aus vier Knotenebenen KE1 bis KE4 in relativ kurzer Zeit übertragen und auf dieser Basis mit der Erkennung einer eingegebenen und zwischengespeicherten Eingabe-Zeichenfolge begonnen werden. Sobald die Teildaten der nächsten Knotenebene übertragen sind, kann der Erkenner einen Schritt weitergehen, bis der gesamte Name erkannt ist. Während bei einer Datenstruktur nach Fig. 2 lange Ortsnamen das Durchlaufen vieler Knotenebenen und damit auch das Übertragen großer Datenmengen erfordern, kann bei der Datenstruktur der in Fig. 3 skizzierten Art für viele Einträge in die Namensliste eine deutliche Verkürzung der Erkennungszeit erwartet werden. Bei anderen Problemstellungen kann wiederum die Datenstruktur der in Fig. 2 skizzierten Art vorteilhafter sein.

Die Erfindung ist nicht auf die beschriebenen Ausführungsbeispiele beschränkt, sondern im Rahmen fachmännischen Könnens in mancherlei Weise abwandelbar und insbesondere auch bei anderen Problemstellungen als der Erkennung von Ortsnamen aus einer Namensliste vorteilhaft anwendbar.

## Patentansprüche

1. Erkennungssystem mit einem Lesespeicher, einem Arbeitsspeicher, einer Eingabeeinrichtung und einem Erkenner, wobei das Erkennungssystem so ausgebildet ist, dass einerseits ein im Lesespeicher gespeicherter Datensatz von Speicher-Zeichenfolgen in den Arbeitsspeicher übertragen wird und andererseits der Erkenner so ausgebildet ist, dass er aus der Verknüpfung einer über die Eingabeeinrichtung zugeführten Eingabe-Zeichenfolge mit dem Inhalt des Arbeitsspeichers eine Zuordnung der Eingabe-Zeichenfolge zu einer der Speicher-Zeichenfolgen ableitet, **dadurch gekennzeichnet, dass** die Speicher-Zeichenfolgen in einer hierarchischen Verzweigungsstruktur mit mehreren Verzweigungsebenen darstellbar sind und bei der Übertragung der Daten des Datensatzes die Teildaten zu aufeinanderfolgenden Strukturebenen zeitlich nacheinanderfolgend angeordnet sind, und dass der Erkenner so ausgebildet ist, dass er bereits vor Abschluss der Übertragung des gesamten Datensatzes die Verknüpfung einer gegebenenfalls vorliegenden Eingabe-Zeichenfolge mit dem noch unvollständigen Arbeitsspeicherinhalt aufnimmt.

2. Erkennungssystem nach Anspruch 1, **dadurch gekennzeichnet, dass** die Teildaten einer Strukturebene als zusammenhängender Datenblock und die Datenblöcke hierarchisch aufeinanderfolgender Strukturebenen nacheinander als lineare Datenfolge in dem Lesespeicher angeordnet sind.

3. Erkennungssystem nach Anspruch 1 oder 2, **dadurch gekennzeichnet, dass** der Lesespeicher ein portabler Datenträger ist.

4. Erkennungssystem nach einem der Ansprüche 1 bis 3, **dadurch gekennzeichnet, dass** die Zeichen der gespeicherten Zeichenfolgen Einzelsymbole und/oder Symbolfolgen aus einem geschlossenen Symbolvorrat sind.

5. Erkennungssystem nach einem der Ansprüche 1 bis 4, **dadurch gekennzeichnet, dass** die Zeichenfolgen aus alphanumerischen Symbolen bestehen.

6. Erkennungssystem nach einem der Ansprüche 1 bis 5, **dadurch gekennzeichnet, dass** zu den Zeichen einer Strukturebene jeweils die Anzahl zulässiger Nachfolgezeichen der nächsten Strukturebene gespeichert ist und übertragen wird.

7. Erkennungssystem nach einem der Ansprüche 4 bis 6, **dadurch gekennzeichnet, dass** zu aus mehreren Symbolen bestehenden Zeichen die Anzahl der Symbole des jeweiligen Zeichens gespeichert ist und übertragen wird.

8. Erkennungssystem nach Anspruch 7, **dadurch gekennzeichnet, dass** die Eingabeeinrichtung zur Aufnahme und Interpretation von Sprache ausgebildet ist.

9. Erkennungssystem nach einen der Ansprüche 1 bis 8, **dadurch gekennzeichnet, dass** die Eingabeeinrichtung einen Zwischenspeicher für die Eingabe-Zeichenfolge enthält.

10. Verfahren zum Betreiben eines Erkennungssystems mit einem Lesespeicher, einem Arbeitsspeicher, einer Eingabeeinrichtung und einem Erkenner mit folgenden Schritten:
Übertragen eines im Lesespeicher gespeicherten Datensatzes von Speicher-Zeichenfolgen in den Arbeitsspeicher;
Ableiten einer Zuordnung der Eingabe-Zeichenfolge zu einer der Speicher-Zeichenfolgen aus der Verknüpfung einer über die Eingabeeinrichtung zugeführten Eingabe-Zeichenfolge mit dem Inhalt des Arbeitsspeichers;
**gekennzeichnet durch** folgende Schritte:
Darstellen der Speicher-Zeichenfolgen in einer hierarchischen Verzweigungsstruktur mit mehreren Verzweigungsebenen;
Übertragen der Daten des Datensatzes, wobei die Teildaten zu aufeinanderfolgenden Strukturebenen zeitlich nacheinander folgen; und
Aufnehmen der Verknüpfung einer gegebenenfalls vorliegenden Eingabe-Zeichenfolge mit dem noch unvollständigen Arbeitsspeicherinhalt bereits vor Abschluss der Übertragung des gesamten Datensatzes.

11. Verfahren nach Anspruch 10, **gekennzeichnet durch** folgende Schritte:
Anordnen der Teildaten einer Strukturebene als zusammenhängenden Datenblock;
Anordnen der Datenblöcke hierarchisch aufeinanderfolgenden Strukturebenen nacheinander als lineare Datenfolge.

12. Verfahren nach Anspruch 10 oder 11, **gekennzeichnet durch** folgenden Schritt:
Bereitstellen der Zeichen der gespeicherten Zeichenfolgen als Einzelsymbole und/oder Symbolfolgen aus einem geschlossenen Symbolvorrat.

13. Verfahren nach einem der Ansprüche 10 bis 12, **gekennzeichnet durch** folgenden Schritt:
Bereitstellen der Zeichenfolgen als alphanumerische Symbole.

14. Verfahren nach einem der Ansprüche 10 bis 13, **gekennzeichnet durch** folgende Schritte:
Speichern und Übertragen der Anzahl zulässiger Nachfolgezeichen der nächsten Strukturebene zu den Zeichen einer Strukturebene.

15. Verfahren nach einem der Ansprüche 10 bis 14, **gekennzeichnet durch** folgende Schritte:
Speichern und Übertragen der Anzahl der Symbole des jeweiligen Zeichens bei aus mehreren Symbolen bestehenden Zeichen.

## Claims

1. A recognition system comprising a reading memory, a working memory, an entry device and a recognition device, said recognition system being configured such that on the one hand a data set of memory character sequences stored in the reading memory is transmitted into the working memory and that on the other hand the recognition device is configured such that it derives an association of the entered-character sequence with one of the memory character sequences from the linking of an entered-character sequence, supplied via the entry device, with the contents of the working memory, **characterized in that** the stored character sequences are adapted to be represented in a hierarchical branched structure having a plurality of branch levels, and, when the data of the data set are transmitted, the partial data with respect to successive structural levels are arranged one after the other over time, and that the recognition device is configured such that it already receives the linking of a possibly-present entered-character sequence with the still-incomplete contents of the working memory before the transfer of the entire data set is complete.

2. The recognition system according to claim 1, **characterized in that** the partial data of a structural level are arranged as a cohesive data block, and the data blocks are arranged in a hierarchy of successive structural levels one after the other as a linear data sequence in the reading memory.

3. The recognition system according to claim 1 or 2, **characterized in that** the reading memory is a portable data carrier.

4. The recognition system according to any one of claims 1 to 3, **characterized in that** the characters of the stored character sequences are individual symbols and/or sequences of symbols from a finite list of symbols.

5. The recognition system according to any one of claims 1 to 4, **characterized in that** the character sequences comprise alphanumeric symbols.

6. The recognition system according to any one of claims 1 to 5, **characterized in that** for the characters of a structural level, the number of permissible subsequent characters of the next structural level is stored and transferred.

7. The recognition system according to any one of claims 4 to 6, **characterized in that** for characters comprising a plurality of symbols, the number of symbols of the respective character is stored and transferred.

8. The recognition system according to claim 7, **characterized in that** the entry device is a device for receiving and interpreting voice.

9. The recognition system according to any one of claims 1 to 8, **characterized in that** the entry device contains an intermediate memory for the entered-character sequence.

10. A method for operating a recognition system having a reading memory, a working memory, an entry device and a recognition device, said method including the steps of:
transmitting a data set of memory character sequences stored in the reading memory into the working memory;
deriving an association of the entered-character sequence with one of the memory character sequences from the linking of an entered-character sequence, supplied via the entry device, with the contents of the working memory,
**characterized by** the following steps:
representing the stored character sequences in a hierarchical branched structure having a plurality of branch levels;
transferring the data of the data set, the partial data with respect to successive structural levels being successive in time;
receiving the linking of a possibly-present entered-character sequence with the still-incomplete contents of the working memory already before the transfer of the entire data set is complete.

11. The method according to claim 1, **characterized by** the following steps:
arranging the partial data of a structural level as a cohesive data block;
arranging the data blocks in a hierarchy of successive structural levels one after the other as a linear data sequence.

12. The method according to claim 10 or 11, **characterized by** the following step:
providing the characters of the stored character sequences as individual symbols and/or sequences of symbols from a finite list of symbols.

13. The method according to any one of claims 10 to 12, **characterized by** the following step:
providing the character sequences as alphanumeric symbols.

14. The method according to any one of claims 10 to 13, **characterized by** the following steps:
storing and transferring the number of permissible subsequent characters of the next structural level with respect to the characters of a structural level.

15. The method according to any one of claims 10 to 14, **characterized by** the following steps:
storing and transferring the number of symbols of the respective character in the case of characters comprising a plurality of symbols.

## Revendications

1. Système de reconnaissance comprenant une mémoire morte, une mémoire de travail, un dispositif d'introduction de données et une unité de reconnaissance, le système de reconnaissance étant réalisé de telle sorte que d'une part une phrase de données de suites de signes de mémoire stockée par la mémoire morte est transmise dans la mémoire de travail et que d'autre part l'unité de reconnaissance est réalisée de telle sorte qu'à partir de la combinaison d'une suite de signes d'entrée alimentée à partir du dispositif d'introduction de données avec le contenu de la mémoire de travail, il détermine une affectation de la suite de signes d'entrée à une des suites de signes de mémoire, **caractérisé en ce que** les suites de signes de mémoire peuvent être représentées dans une structure d'embranchement hiérarchique ayant plusieurs niveaux d'embranchement et que lors de la transmission des données de la phrase de données, les données partielles sont disposées dans le temps les unes à la suite des autres dans des plans de structure qui se suivent, et **en ce que** l'unité de reconnaissance est réalisée de telle sorte qu'elle enregistre la combinaison d'une suite de signes d'entrée éventuellement présente avec le contenu de la mémoire de travail encore incomplet, déjà avant la fin de la transmission de la phase de données complète.

2. Système de reconnaissance selon la revendication 1, **caractérisé en ce que** les données partielles d'un niveau de structure sont arrangées sous la forme de blocs de données continus et les blocs de données de niveaux de structure qui se suivent hiérarchiquement sont arrangées les uns après les autres sous la forme de suites de données linéaires dans la mémoire morte.

3. Système de reconnaissance selon la revendication 1 ou 2, **caractérisé en ce que** la mémoire morte est un support de données portable.

4. Système de reconnaissance selon l'une des revendications 1 à 3, **caractérisé en ce que** les signes des suites de signes enregistrés sont des symboles individuels et/ou des suites de symboles issues d'un stock de symboles fermé.

5. Système de reconnaissance selon l'une des revendications 1 à 4, **caractérisé en ce que** les suites de signes sont constituées à partir de symboles alphanumériques.

6. Système de reconnaissance selon l'une des revendications 1 à 5, **caractérisé en ce qu'**en plus des signes d'un niveau de structure, la quantité de signes de suites admissibles du prochain niveau de structure est enregistrée et transmise.

7. Système de reconnaissance selon l'une des revendications 4 à 6, **caractérisé en ce que** en plus des signes constitués de plusieurs symboles, la quantité de symboles du signe respectif est enregistrée et transmise.

8. Système de reconnaissance selon la revendication 7, **caractérisé en ce que** le dispositif d'introduction de données est réalisé pour une réception et une interprétation de la voix.

9. Système de reconnaissance selon l'une des revendications 1 à 8, **caractérisé en ce que** le dispositif d'introduction de données contient une mémoire intermédiaire pour les suites de signes d'entrée.

10. Procédé pour faire fonctionner un système de reconnaissance ayant une mémoire morte, une mémoire de travail, un dispositif d'introduction de données et une unité de reconnaissance, le procédé comprenant les étapes suivantes :
transmettre dans la mémoire de travail une phrase de données constituée de suites de signes de mémoire enregistrée dans la mémoire morte ;
déterminer une affectation de la suite de signes d'entrée à une des suites de signes de mémoire à partir de la combinaison d'une suite de signes d'entrée alimentée par le dispositif d'introduction de données avec le contenu de la mémoire de travail ;
**caractérisé par** les étapes suivantes :
représenter la suite de signes de mémoire dans une structure d'embranchement hiérarchique ayant plusieurs niveaux d'embranchement ;
transmettre les données de la phrase de données, les données partielles vers des niveaux de structure qui se suivent, se suivant les unes derrière les autres dans le temps ; et
enregistrer la combinaison d'une suite de signes d'entrée éventuellement présente avec le contenu de la mémoire de travail encore incomplète déjà avant la fin de la transmission de la phrase de données complète.

11. Procédé selon la revendication 10, **caractérisé par** les étapes suivantes :
arranger les données partielles d'un niveau de structure sous la forme de blocs de données continues ;
arranger les blocs de données de niveaux de structures qui se suivent hiérarchiquement les uns derrière les autres sous la forme de suites de données linéaires.

12. Procédé selon la revendication 10 ou 11, **caractérisé par** l'étape suivante :
fournir les signes des suites de signes enregistrées sous la forme de symboles individuels et/ou de suites de symboles issues d'un stock de symboles fermé.

13. Procédé selon l'une des revendications 10 à 12, **caractérisé par** l'étape suivante :
fournir les suites de signes sous la forme de symboles alphanumériques.

14. Procédé selon l'une des revendications 10 à 13, **caractérisé par** les étapes suivantes :
enregistrer et transmettre la quantité de signes de suites admissibles du niveau de structure suivant aux signes d'un niveau de structure.

15. Procédé selon l'une des revendications 10 à 14, **caractérisé par** les étapes suivantes :
enregistrer et transmettre la quantité de symboles du signe respectif pour des signes constitués de plusieurs symboles.
